# EUROPEAN PATENT SPECIFICATION

(11) **EP 0 881 976 B1**
(45) Date of publication and mention of the grant of the patent: **23.06.1999**
(21) Application number: 97903243.0
(22) Date of filing: 10.02.1997
(51) Int. Cl.: B62B 3/14

(54) **SUPERMARKET TROLLEY**
EINKAUFSWAGEN
CHARIOT DE SUPERMARCHE

(30) Priority: 23.02.1996 IT TO960032 U
(43) Date of publication of application: 09.12.1998
(73) Proprietor: Comital S.R.L., 12042 Bra (IT)
(72) Inventor: BERGIA, Michelangelo, I-12030 Cavallermaggiore (IT)
(74) Representative: Buzzi, Franco
(86) International application number: EP9700577
(87) International publication number: WO9730880

(56) References cited:
- EP-A- 0 176 168
- EP-A- 0 222 480
- DE-A- 2 537 214
- US-A- 4 268 049

## Description

### BACKGROUND OF THE INVENTION

### Field of the invention

The present invention is related to supermarket trolleys.

### Related prior art

Traditionally these trolleys, comprising a wheeled base with a support from which a basket container for the merchandise is overhanging, have a metal construction. As a consequence these known supermarket trolleys are relatively expensive and heavy, are easily subjected to degradation by environmental agents, and are in use troublesomely noisy.

In order to at least partially overcome the above drawbacks, from international patent application WO 95/03201 a supermarket trolley is known, having a moulded plastic material structure. This structure is constituted by a plurality of panels provided with mortice and tenon joints for their assembling and permanently joined together through mechanical locking members.

This known solution is remarkably complicated from the constructive point of view, is relatively bulky and heavy, and in case of damage or breakage of one of the panels the whole trolley has to be replaced.

Additionally, a supermarket trolley including all the features recited in the preamble of claim 1 is known from EP-A-0222480. A drawback of this known trolley, which is also common both to the conventional trolleys having a metallic construction and to the above-mentioned trolley having a moulded plastic material structure, consists of an inadequate capability of mutual interpenetrating among identical trolleys in a condition forming into columns for their collective transportation and storage at the pick-up stations of supermarkets. Actually, in the interpenetrated condition the rearward projection of each trolley relative to the preceding trolley is relevant, which involves evident encumbrance problems.

### SUMMARY OF THE INVENTION

The general object of the present invention is to provide a supermarket trolley having a moulded plastic material construction which enables to overcome in an efficient and functional way the inconveniences both of the traditional metal trolleys and of the already known plastic material trolleys.

More particularly, one object of the invention is to provide a sturdy, resistant and light supermarket trolley, designed to be manufactured and assembled in a relatively simple and cheap way.

A further object of the invention is to provide a supermarket trolley whose configuration is such as to remarkably reduce encumbrance thereof in the interpenetrated condition with identical trolleys.

A further object of the invention is to provide a supermarket trolley whose base can be selectively employed with basket containers having a different size.

According to the invention these objects are achieved essentially by the feature set forth in the characterising portion of claim 1. Additional secondary features are defined in subclaims 2-4.

The upper tie rod, defining a pivot shaft for a rear swinging wall and associated foldable baby seat of the basket container, is coaxially arranged within the tubular bar which constitutes a push handle of the trolley. This arrangement, according to which the push handle and the pivot shaft of the rear swinging wall of the basket container are coaxial to each other, enables to reduce encumbrance of the trolley in the interpenetrated condition with identical trolleys, without negatively affecting the stability characteristics of the trolley in connection with non-overturning requirements in the condition of use of the foldable baby seat.

Moreover, the supermarket trolley according to the invention is particularly resistant and sturdy, is almost unaffected by environmental agents, is compact, elastic and extremely light. In case of damage or breakage of one of its components (base with support/basket container), this can be easily replaced while retaining the other component, thus without the need of replacing the entire trolley.

The same base can advantageously be employed with basket containers having a different size.

Furthermore the trolley according to the invention is particularly noiseless both when runned and also upon interpenetrating with identical trolleys to form into columns. In the interpenetrated condition, projection of each trolley relative to the preceding trolley is remarkably reduced as compared to the case of the traditional trolleys, with appreciable advantages in terms of a reduced encumbrance.

The structure of the trolley according to the invention does not prevent proper operation of the anti-theft barriers normally provided in the supermarkets, and has a very height recycling capability since substantially 100% of the material employed for its manufacturing can be recovered.

The integral bearing bracket for the basket container of the trolley according to the invention reduces overhang of the basket container, thus enabling filling it up even with heavy goods without risks of structural yielding.

### BRIEF DESCRIPTION OF THE DRAWINGS

Additional features and advantages of the invention will become apparent through the detailed following description, with references to the accompanying drawings purely provided by way of non limiting example, in which:

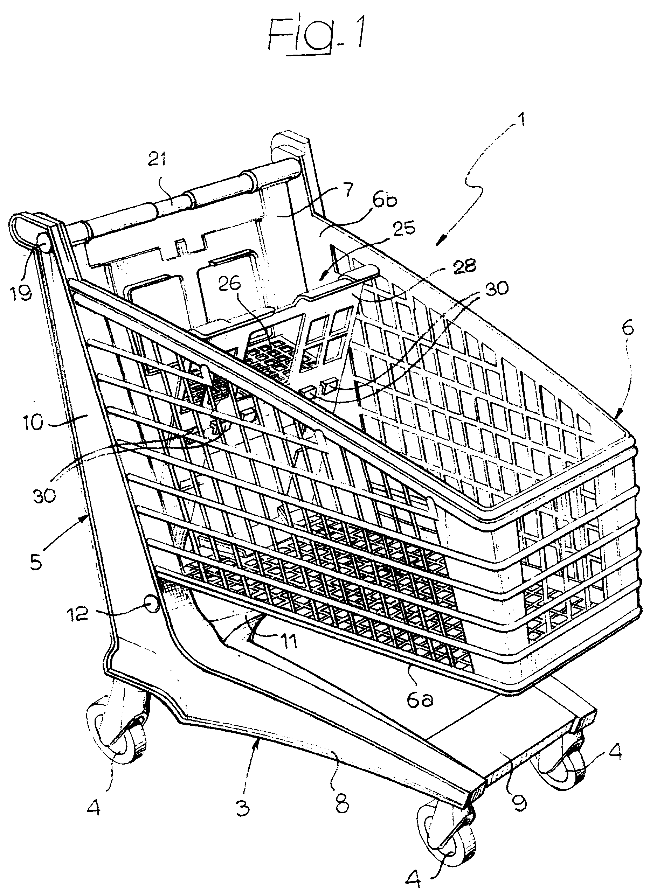

- Figure 1 is a diagrammatic perspective view of a supermarket trolley having a moulded plastic material construction according to the invention,
- Figure 2 is a front elevational view in a reduced scale of the trolley,

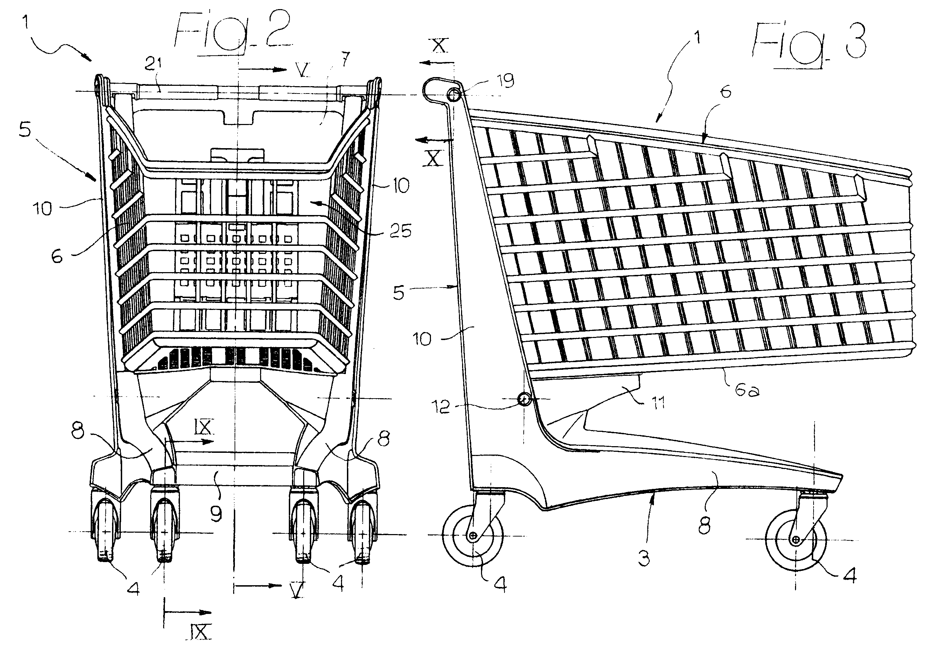

- figure 3 is a lateral elevational view of figure 2,
- Figure 4 is a view same as figure 3 showing the trolley in the condition forming into a column with identical trolleys,
- Figure 5 is a vertically sectioned and enlarged view along line V-V of Figure 2,
- Figure 6 is a vertically sectioned view along line VI-VI of Figure 5,
- Figure 7 is a view same as Figure 5 showing the trolley baby seat in the condition of use,
- Figure 8 shows in an enlarged scale the detail indicated by arrow VIII in Figure 6,
- Figure 9 is a partially sectioned and enlarged view along line IX-IX of Figure 3, and
- Figure 10 is a sectioned and enlarged view along line X-X of Figure 3.

### DETAILED DESCRIPTION OF THE PREFERRED EMBODIMENT

In the drawings, reference numeral 1 generally designated a supermarket trolley according to the invention, essentially comprising a base 3 provided with four castor wheels 4 and carrying at its rear end a support 5 projecting upwardly and from which a basket container 6 is cantilevered, so as to overhang above the base 3.

According to the invention, the base 3 and the support 5 are formed by a single moulded plastic material body, and the basket container 6 is also formed by a distinct moulded plastic material body.

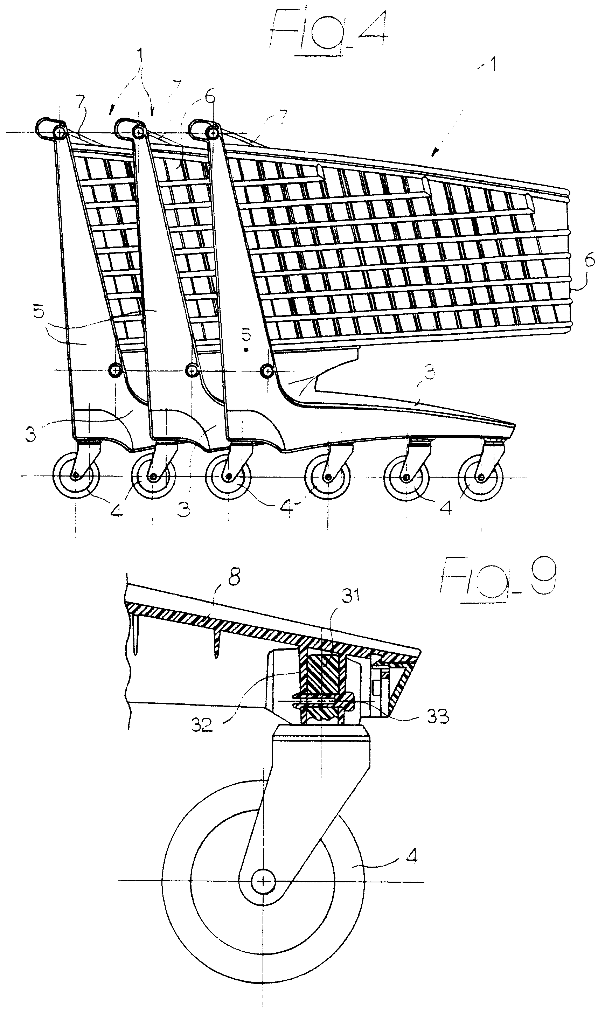

More particularly, the basket container 6 has a generally quadrangular design, which is forwardly tapered in the lateral and vertical directions, with grid-like walls integrally formed upon moulding. The rear end of the basket container 6, indicated as 6b, comprises a movable wall 7 pivotally supported superiorly, such as clarified herebelow, so as to be able to swing between a substantially vertical lowered position, in which it closes at the rear the basket container 6, and a raised position (partially shown in Figure 4) in which it is arranged substantially horizontally above the basket container 6. In this raised position the basket container 6 of an identical trolley 1 is allowed to penetrate into the basket container 6, in the configuration forming into a column shown in figure 4. As it will become apparent in the following, the configuration of the trolley 1 is such that, in the interpenetrated condition of figure 4, the projection of each trolley 1 rearwardly of the preceding trolley 1 is remarkably reduced, thus achieving the advantage of appreciably reducing encumbrance.

The base 3 is formed with pair of substantially horizontal spaced-apart legs 8, forwardly converging and joined to each other at the respective front ends by an integral transverse member 9.

The support 5 is in turn formed by two spaced-apart lateral struts 10 smoothly connected inferiorly to the legs 8 of the base 3, and between which the rear end 6b of the basket container 6 is fitted and connected such as clarified herebelow. The lower portions of the two struts 10 are connected to each other, in correspondence of the rear portions of the legs 8 of the base 3, by an arcuated integral bracket 11 upon which the corresponding area of the bottom wall 6a of the basket container 6 is bearing, whereby overhang of the container 6 relative to the support 5 is correspondingly reduced. The bracket 11 is arranged above the interspace delimited between the legs 8 of the base 3 and is designed so as to allow, in the configuration forming into a column shown in Figure 4, interpenetrating of the base 3 of an identical trolley 1.

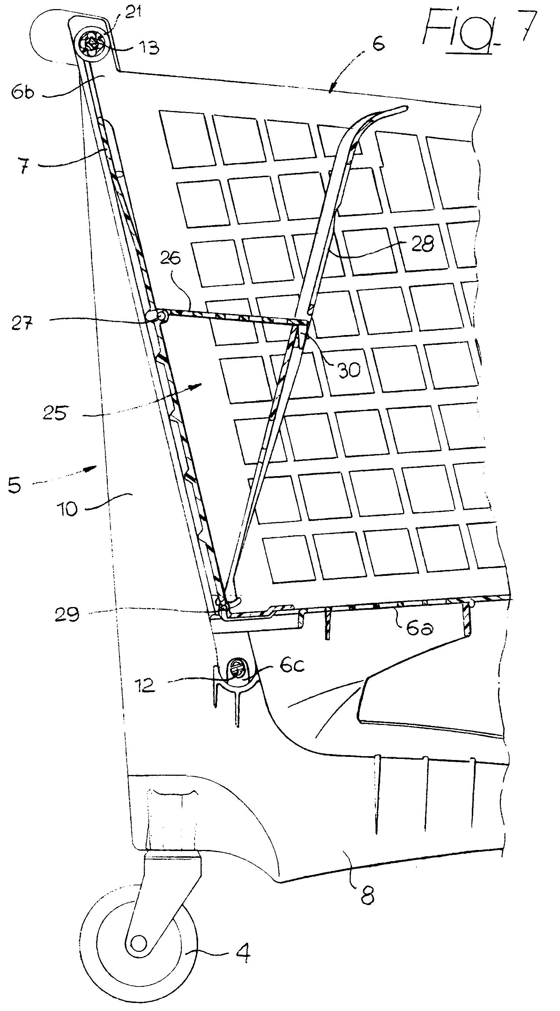

The basket container 6 and the support 5 of the base 3 are mutually connected so as to provide quick assembly and disassembly therebetween, to the aim of simplifying manufacturing and allowing convenient replacement of one or the other component in case of damage or breakage thereof, as well as easy interchangeability of the basket container 6 with similar containers having a smaller size. This connection is performed by means of retaining pin members between the two lateral struts 10 of the support 5 and the rear end 6b of the basket container 6. As shown in better detail in Figure 6, these retaining pin members include a pair of lower snap-fit resilient pins 12, transversally engaged into corresponding integral lower formations 6c of the basket container 6, such as depicted in better detail in figure 8, and one upper tie rod 13 interconnecting superiorly the two lateral struts 10 of the support 5.

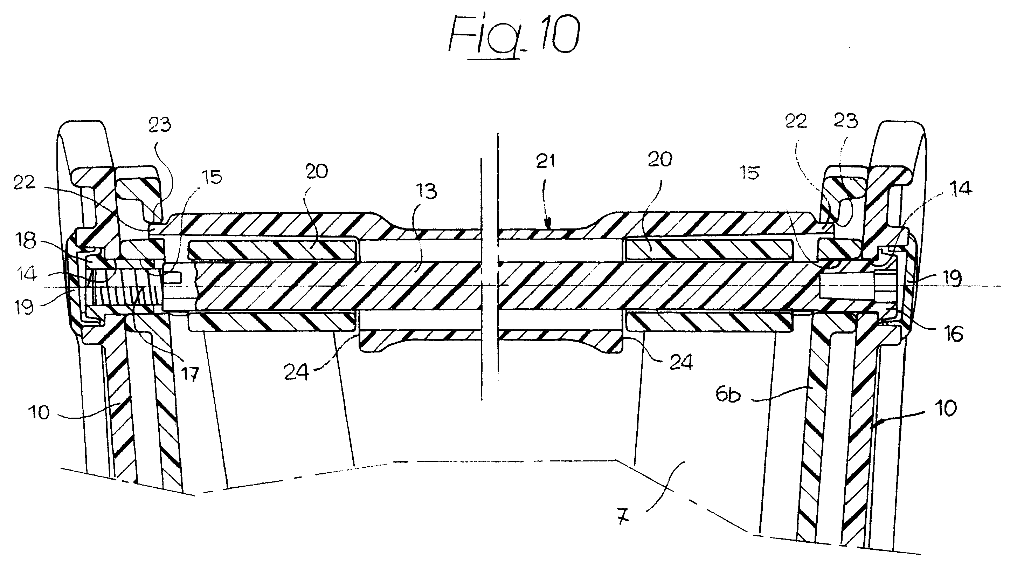

As shown in detail in figure 10, the tie rod 13 is fitted across corresponding openings 14, 15 of the lateral struts 10 and of the rear end 6b of the basket container 6, respectively, and is formed at one end thereof with an enlarged retainer head 16 abutting against the outer wall of one of the struts 10. At the opposite end, the tie rod 13, which is also normally made of moulded plastic material, is formed with an outerly threaded axial spigot 17 onto which an innerly threaded locking member 18 is engaged, reacting against the outer surface of the other lateral struts 10. The retainer head 16 and the locking member 18 are enclosed by respective protection covers 19 snap-secured to the lateral struts 10. Similar protection covers 19 may also be provided in correspondence of the lower pins 12.

The tie rod 13, further to constitute the upper connecting member both between the struts 10 and between the support 5 and the basket container 6, is also forming a pivot shaft for the rear swinging wall 7. To such effect, the swinging wall 7 is formed superiorly with a pair of spaced-apart integral sleeves 20 rotatably mounted onto the shaft 13.

Reference 21 designated a tubular bar coaxially surrounding the tie rod 13 and whose ends 22 are engaged within corresponding openings 23 of the rear end 6b of the basket container 6. The tubular bar 21, which is formed inferiorly with notches 24 intended to allow angular displacement of the sleeves 20 of the rear swinging wall 7, defines a push handle of the trolley 1.

Due to this arrangement, since the upper connecting system (tie rod 13) between the support 5 and the basket container 6, the pivot shaft (the tie rod 13 itself) of the rear swinging wall 7, and the handle 21 are coaxial to one another, encumbrance of the trolley 1 rearwardly of the support 5 is considerably reduced, which leads correspondingly to appreciably reduce rear projection of each trolley 1 relative to the preceding trolley 1 in the interpenetrated condition forming into a column shown in Figure 4.

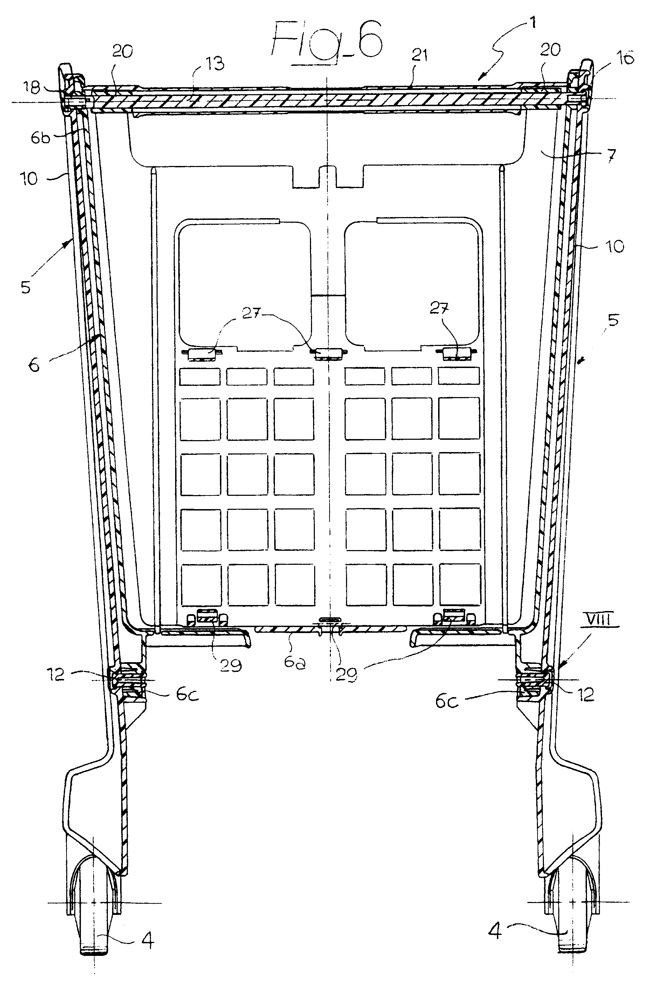

In addition to the above disclosed functions, the tie rod 13 further constitutes a support member for a foldable baby seat of which the trolley 1 may normally be provided. This foldable baby seat, generally designated as 25, is actually carried by the rear swinging wall 7. As shown in detail in figures 6 and 7, the baby seat 25 comprises a sitting portion 26 having one end hinged at 27 to a substantially central area of the swinging wall 7, and slidably fitted across a backrest element 28 which in turn is pivoted lowerly at 29 to the base of the swinging wall 7. The end of the sitting portion 26 opposite to the hinged connection 27 is formed with integral stop members 30.

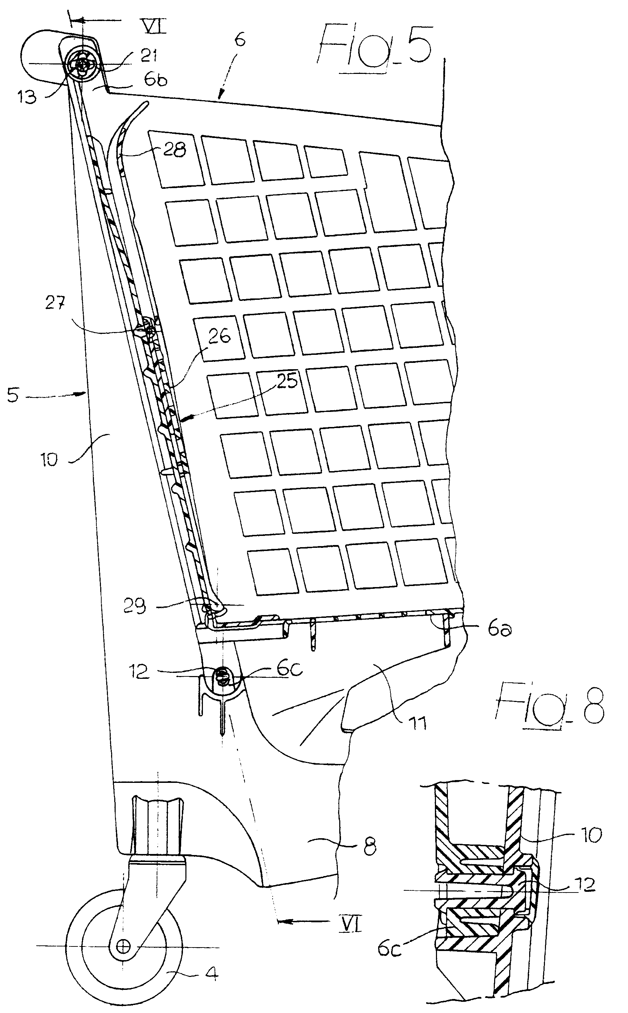

In the inoperative closed condition of the baby seat 25 shown in Figure 5, the sitting portion 26 is lowered against the swinging wall 7, and correspondingly the backrest element 28 is held parallelly and adjacent to the swinging wall 7. To position the baby seat 25 in the operative open position shown in figure 7, the backrest element 28 is tilted forwardly so as to simultaneously perform lifting of the sitting portion 26 up to abutment between the stop members 30 and the backrest element 28.

Assembling between the components 26, 28 of the foldable baby seat 25 and the swinging wall 7 of the basket container 6 is also carried out by means of quick snap-fit couplings.

A similar quick coupling system is provided for mounting the castor wheels 4: as shown in detail in Figure 9, each of these castor wheels 4 is provided superiorly with a vertical spigot 31 axially fitted within a corresponding vertical housing 32 integrally formed under the base 3, and locked within the housing 32 by means of a respective transverse snap-fit resilient retaining pin member 33.

It will be apparent from the above description that the supermarket trolley according to the invention is provided with a particularly resistant and sturdy structure, without sharp edges, and has a generally compact, resilient and light configuration. The trolley is designed to be manufactured and assembled in a cheap and simple way, and to be equally easily disassembled. The trolley according to the invention is also capable to conveniently interpenetrate with identical trolleys, appreciably reducing overall encumbrance thereof when forming into a column, is particularly noiseless both during displacement and upon forming into columns, and can be almost entirely recycled. The possibility of replacing one of the trolley components in case of breakage, while retaining the other unimpaired component thereof, evidently provides a remarkable saving for the supermarket management. Moreover the trolley can be easily transported in the disassembled condition of its components, and then easily assembled for use. In this connection it is to be pointed out that all the above disclosed mounting means (snap-fit pins 12, tie rod 13, hinged connections 27 and 29 of the baby seat 25, snap-fit pins 33) do not require any particular equipment for installation thereof, and release thereof can be conveniently carried out by means of simple manual tools.

Naturally the details of construction and the embodiments may widely varied with respect to what has been disclosed and illustrated, without thereby departing from the scope of the present invention, such as defined in the appended claims.

## Claims

1. A supermarket trolley (1) having a push handle (21) and comprising a wheeled base (3) and a support (5) formed by a single moulded plastic material body, a basket container (6) formed by a distinct moulded plastic material body overhanging from said support (5) and connected thereto in a quickly releasable way, said support (5) including two lateral struts (10) between which a rear end (6b) of the basket container (6) is fitted, said rear end including a swinging wall (7) angularly displaceable between a lowered position and a raised position and a foldable baby seat (25), and retaining means (12, 13) being provided between said two lateral struts (10) and said rear end (6b) of the basket container (6), said retaining means including one upper tie rod (13) spanning transversally between said two lateral struts (10) of the support (5) and defining a pivot support for said swinging wall (7) and a support for said foldable baby seat (25) through said swinging wall (7), characterized in that said retaining means also include a pair of lower snap-fit pins (12), and in that said upper tie rod (13) is coaxial with said push handle (21).

2. Trolley according to claim 1, characterized in that said push handle consists of a tubular bar (21) coaxially surrounding said upper tie rod (13).

3. Trolley according to claim 1, characterized in that between said support (5) and said base (3) an integral bearing bracket (11) is formed to support said basket container (6) near to said rear end (6b) thereof, said bracket (11) being designed so as to enable interpenetrating of the base (3) of an identical trolley (1) to form into a column.

4. Trolley according to claim 1, characterized in that the base (3) is provided with castor wheels (4) connected to said base (3) through retaining snap-fit pin members (33).

## Patentansprüche

1. Einkaufswagen (1) mit einem Schiebegriff (21) und umfassend ein fahrbares Basisteil (3) und einen durch einen einteilig geformten Kunststoffkörper gebildeten Träger (5), einen Korbbehälter (6), der durch einen ausgeprägt geformten, von dem Träger (5) hervorstehenden Kunststoffkörper gebildet ist und damit auf schnell lösbare Art verbunden ist, wobei der Träger (5) zwei Seitenholme (10) aufweist, zwischen denen ein rückwärtiges Ende (6b) des Korbbehälters (6) befestigt ist, wobei das rückwärtige Ende eine schwenkbare Wand (7) aufweist, die zwischen einer abgesenkten Stellung und einer angehobenen Stellung winkelverschiebbar ist, und eine Verankerungeinrichtung (12, 13), die zwischen den beiden Seitenholmen (10) und dem rückwärtigen Ende (6b) des Korbbehälters (6) vorgesehen ist, wobei die Verankerungseinrichtung eine obere Verbindungsstange (13) aufweist, die sich quer zwischen den beiden Seitenholmen (10) des Trägers (5) erstreckt und einen Schwenkachsenträger für die Schwenkwand (7) und über diese Schwenkwand (7) eine Abstützung für den klappbaren Kindersitz (25) definiert,
dadurch gekennzeichnet, daß
die Verankerungseinrichtung auch ein Paar unterer Rastbolzen (12) aufweist und daß die obere verbindunggstange (13) koaxial mit dem Schiebegriff (21) ist.

2. Einkaufswagen nach Anspruch 1, dadurch gekennzeichnet, daß der Schiebegriff aus einer rohrförmigen Stange (21) besteht, die die obere Verbindungsstange (13) koaxial umgibt.

3. Einkaufswagen nach Anspruch 1, dadurch gekennzeichnet, daß zwischen dem Träger (5) und dem Basisteil (3) ein einstückiger Lagerbügel (11) ausgebildet ist, um den Korbbehälter (6) nahe an dessen rückwärtigem Ende (6b) abzustützen, wobei der Bügel (11) so ausgelegt ist, daß er das Einschieben des Basisteils (3) eines identischen Einkaufswagens (1) zur Bildung einer Kolonne ermöglicht.

4. Einkaufswagen nach Anspruch 1, dadurch gekennzeichnet, daß das Basisteil (3) mit Deichselrollen (4) versehen ist, die über Vorsteck-Rastbolzenelemente (33) mit dem Basisteil (3) verbunden sind.

## Revendications

1. Chariot (1) de supermarché, ayant une poignée (21) de poussée et comportant une base (3) à roues et un support (5) formé par un simple corps de matière plastique moulée, un récipient (6) formant panier réalisé en un corps séparé de matière plastique moulée placé en surplomb à partir du support (5) et raccordé à celui-ci d'une manière qui peut être facilement séparée, le support (5) comprenant deux montants latéraux (10) entre lesquels est montée une extrémité arrière (6b) du récipient (6) formant panier, l'extrémité arrière comprenant une paroi pivotante (7) déplaçable angulairement entre une position abaissée et une position levée, et un siège pliant (25) pour bébé, et un dispositif de retenue (12, 13) placé entre les deux montants latéraux (10) et l'extrémité arrière (6b) du récipient (6) formant panier, le dispositif de retenue comprenant un tirant supérieur (13) disposé transversalement entre les deux montants latéraux (10) du support (5) et délimitant un support de pivot de la paroi pivotante (7) et un support du siège pliant (25) pour bébé par l'intermédiaire de la paroi pivotante (7), caractérisé en ce que le dispositif de retenue comprend aussi une paire de broches inférieures (12) à enclenchement élastique, et en ce que le tirant supérieur (13) est coaxial à la poignée de poussée (21).

2. Chariot selon la revendication 1, caractérisé en ce que la poignée de poussée est constituée d'une barre tubulaire (21) entourant coaxialement le tirant supérieur (13).

3. Chariot selon la revendication 1, caractérisé en ce que, entre le support (5) et la base (3), un support solidaire (11) d'appui est formé afin qu'il supporte le récipient (6) formant panier près de son extrémité arrière (6b), le support (11) étant réalisé afin qu'il permette l'emboîtement de la base (3) d'un chariot identique (1) pour la formation d'une colonne.

4. Chariot selon la revendication 1, caractérisé en ce que la base (3) possède des roulettes (4) raccordées à la base (3) par des organes (33) à broches de retenue à enclenchement élastique.
